# EUROPÄISCHE PATENTSCHRIFT

(11) **EP 1 429 058 B1**
(45) Veröffentlichungstag und Bekanntmachung des Hinweises auf die Patenterteilung: **01.02.2006**
(21) Anmeldenummer: 03027362.7
(22) Anmeldetag: 27.11.2003
(51) Int. Cl.: F16J 15/08

(54) **Flachdichtung, insbesondere Abgaskrümmerdichtung**
Gasket, in particular for exhaust manifold
Joint plat, en particulier joint pour collecteur d'échappement

(30) Priorität: 13.12.2002 DE 10258319
(43) Veröffentlichungstag der Anmeldung: 16.06.2004
(73) Patentinhaber: ElringKlinger AG, 72581 Dettingen (DE)
(72) Erfinder: Beutter, Ulrich, 72766 Reutlingen-Reicheneck (DE); Eben, Wolfgang, 72555 Münsingen-Apfelstetten (DE); Kullen, Wilhelm, 72584 Hülben (DE); Klump, Uwe Georg, 72581 Dettingen/Erms (DE)
(74) Vertreter: Hoeger, Stellrecht & Partner Patentanwälte

(56) Entgegenhaltungen:
- US-A- 4 103 913
- US-B1- 6 189 895
- PATENT ABSTRACTS OF JAPAN vol. 1995, no. 07, 31. August 1995 (1995-08-31) -& JP 07 102965 A (TOYOTA MOTOR CORP), 18. April 1995 (1995-04-18)
- PATENT ABSTRACTS OF JAPAN vol. 009, no. 179 (M-399), 24. Juli 1985 (1985-07-24) & JP 60 047851 A (TOYOTA JIDOSHA KK; OTHERS: 01), 15. März 1985 (1985-03-15)

## Beschreibung

Die Erfindung betrifft eine Flachdichtung zur Abdichtung eines Dichtspalts zwischen einander zugewandten Dichtflächen von Maschinenbauteilen, in denen sich mehrere für heiße Fluide (wie Abgase von Verbrennungsmotoren) vorgesehene Durchlaßkanäle befinden, welche in Fluiddurchlaßöffnungen münden, die an einander gegenüberliegenden Stellen in den Maschinenbauteil-Dichtflächen ausgebildet sind, wobei eine zwischen den Maschinenbauteil-Dichtflächen einzuspannende, mindestens eine Metallblechlage aufweisende Dichtungsplatte der Flachdichtung für jeweils zwei einander gegenüberliegende Fluiddurchlaßöffnungen der beiden Maschinenbauteile eine Fluiddurchtrittsöffnung besitzt, der wenigstens ein die Fluiddurchtrittsöffnung umschließendes Abdichtelement der Dichtungsplatte zugeordnet ist, und wobei die Dichtungsplatte mehrere, den Fluiddurchtrittsöffnungen benachbarte Schraubenlöcher für den Durchtritt von dem Einspannen der Flachdichtung zwischen den Maschinenbauteil-Dichtflächen dienenden Schrauben aufweist.

US 4 103 913 und JP7102965 offenbaren derartige bekannte Flachdichtungen mit Fluiddurchtrittsöffnungen und Schraubenlöchern.

Ferner betrifft die Erfindung eine Baugruppe mit einem Zylinderkopf und einem einen Flansch aufweisenden Abgaskrümmer, dessen Flansch mittels jeweils einen Gewindeschaft aufweisenden Schrauben mit dem Zylinderkopf verbunden ist, sowie mit einer zwischen dem Zylinderkopf und dem Abgaskrümmerflansch eingespannten Flachdichtung.

Im folgenden soll die der Erfindung zugrundeliegende Problemstellung anhand einer Abgaskrümmerdichtung für einen modernen Verbrennungsmotor erörtert werden, obwohl die Erfindung bei allen Systemen Vorteile mit sich bringt, bei denen eine Flachdichtung zwischen zwei Maschinenbauteilen eingespannt wird, die während des Maschinenbetriebs oder während einer Betriebsphase erheblich unterschiedliche Temperaturen aufweisen.

Der unter Zwischenschaltung einer Abgaskrümmerdichtung mittels Schrauben mit einem Zylinderkopf zu verbindende Flansch eines Abgaskrümmers zeigt beim Inbetriebnehmen eines kalten Verbrennungsmotors erhebliche Verschiebungen in der Ebene des sogenannten Dichtspalts, welcher von den die Abgaskrümmerdichtung zwischen sich aufnehmenden Dichtflächen des Zylinderkopfs und des Abgaskrümmerflansches definiert wird. Die Ursachen für die Bewegungen der Dichtflächen von Zylinderkopf und Abgaskrümmerflansch relativ zueinander sind in folgendem zu sehen: Die hohen Abgastemperaturen (bis ca. 900°C) heizen den Abgaskrümmer rasch auf, während der Zylinderkopf aufgrund seiner Kühlung durch das Kühlmedium des Verbrennungsmotors relativ kühl bleibt, und die Abgaskrümmerdichtung behindert den Wärmeaustausch zwischen Zylinderkopf und Abgaskrümmer, so daß zwischen diesen beiden Maschinenbauteilen ein hoher Temperaturgradient entsteht; ferner besitzen bei diesen modernen Motoren die Werkstoffe von Zylinderkopf und Abgaskrümmer recht unterschiedliche Wärmedehnungskoeffizienten, da der Zylinderkopf aus einer Leichtmetallegierung besteht, während es sich beim Abgaskrümmer um eine Schweißkonstruktion aus Stahlteilen oder um ein Graugußteil handelt. Es muß aber sichergestellt sein, daß in jeder Betriebsphase des Verbrennungsmotors der Dichtspalt zwischen Zylinderkopf und Abgaskrümmerflansch durch die Abgaskrümmerdichtung zuverlässig abgedichtet wird.

Besondere Beachtung muß in diesem Zusammenhang die Verbindung zwischen Zylinderkopf und Abgaskrümmer finden, welche über in Gewindebohrungen des Zylinderkopfs eingeschraubte Schrauben mit Schraubenkopf oder Gewindebolzen mit auf diese aufgeschraubten Muttern erfolgt. Diesbezüglich seien zunächst zwei extreme Konstruktionen betrachtet:
(1) starre Verbindung des Abgaskrümmers mit dem Zylinderkopf, insbesondere dadurch, daß die erwähnten Schrauben bzw. Muttern mit sehr hohem Anzugsdrehmoment angezogen werden, und
(2) Verbindung des Abgaskrümmers mit dem Zylinderkopf derart, daß sich Abgaskrümmerflansch und Zylinderkopf relativ zueinander verschieben können.

Die starre Verbindung (1) erfordert einen steifen Abgaskrümmerflansch, an den sich ein relativ flexibler Bereich des Abgaskrümmers anschließt, welcher die auftretenden Wärmedehnungen elastisch aufnehmen kann. Derart partiell flexible Abgaskrümmer findet man häufig bei Rennmotoren mit einem sogenannten, als Schweißkonstruktion gestalteten Fächerkrümmer, bei dem von einem Abgaskrümmerflansch mehrere Rohre zu einem gemeinsamen Abgasrohr führen. Eine solche Konstruktion nimmt jedoch einen verhältnismäßig großen Bauraum ein und ist auch aufwendig in ihrer Herstellung. Da die unterschiedlichen Wärmedehnungen von Zylinderkopf und Abgaskrümmer dazu führen, daß die erwähnten Schrauben bzw. Gewindebolzen Scher- und Zugbeanspruchungen unterworfen werden, führt die starre Verbindung (1) bei Fächerkrümmern dazu, daß im Motorbetrieb der Abgaskrümmerflansch hohen Biegebeanspruchungen unterliegt und häufig auch plastisch verformt wird, woraus eine unebene Dichtfläche des Abgaskrümmerflansches resultiert.

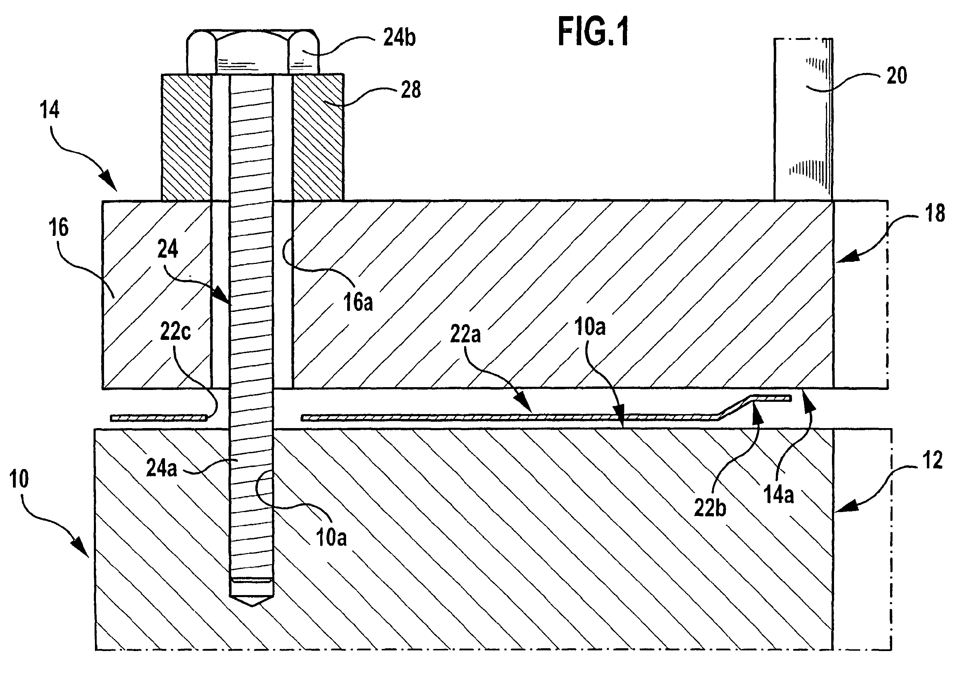

Die Verschiebungen zulassende Verbindung (2) findet man häufig bei als Gußstücke gestalteten Abgaskrümmern, da die relativ dickwandigen Gußteile bei einer starren Verbindung (1) im Motorbetrieb zu enormen Schubkräften führen würden, die Schrauben- oder Gewindeschäfte abscheren oder die Gewinde der im Zylinderkopf vorgesehen Gewindebohrungen zerstören können. Repräsentativ für eine solche Verbindungsart ist die von der ElringKlinger AG bereits praktizierte Lösung, welche anhand der Fig. 1 später noch näher erläutert werden wird. Bei dieser Konstruktion erfolgt die Verbindung zwischen Abgaskrümmer und Zylinderkopf mit langen Schrauben, deren Köpfe sich nicht unmittelbar auf dem Abgaskrümmerflansch abstützen, sondern auf von den Schraubenschäften durchsetzten Hülsen, welche sich ihrerseits wieder auf dem Abgaskrümmerflansch abstützen. Die Schraubenschäfte durchsetzen die Hülsen und den Abgaskrümmerflansch mit bezüglich der Schraubenschaftachse radialem Spiel, so daß Schiebebewegungen zwischen Abgaskrümmerflansch und Zylinderkopf von den Schraubenschäften elastisch aufgefangen werden können - die langen Schraubenschäfte können sich elastisch durchbiegen. Diese Lösung des Problems erfordert jedoch zusätzliche Bauteile, nämlich die Hülsen, einen höheren Montageaufwand sowie einen größeren Bauraum (wegen der den Abgaskrümmerflansch deutlich überragenden Schrauben und Hülsen).

Der Erfindung lag die Aufgabe zugrunde, eine Flachdichtung für die vorgenannten Zwecke zu schaffen, welche einerseits Schiebebewegungen zwischen den Maschinenbauteilen (z. B. Zylinderkopf und Abgaskrümmer) zuläßt, sich jedoch andererseits kostengünstiger einsetzen läßt als die vorstehend beschriebene bekannte Konstruktion mit langen Schrauben und Hülsen.

Zur Lösung dieser Aufgabe wird erfindungsgemäß vorgeschlagen, in allen Schraubenlöcherbereichen der Dichtungsplatte, in denen Relativbewegungen zugelassen werden sollen, Federelemente in die Dichtung zu integrieren, welche so gestaltet sind, daß sie bei eingebauter, gepreßter Dichtung in zur Dichtungsplatte senkrechter Richtung mit Druck beaufschlagt und elastisch verformbar sind, und zwar sowohl im Sinne einer Verminderung, als auch im Sinne einer Vergrößerung der Dicke oder Höhe der Federelemente. Beim Einsatz einer erfindungsgemäßen Flachdichtung werden die Schrauben bzw. Gewindeschäfte, welchen Federelemente zugeordnet sind, durch die stärkere Erwärmung des einen Maschinenbauteils nicht in Längsrichtung des Schraubenschaftes überbelastet (was zu einer plastischen Längung des Schraubenschaftes oder zur Beschädigung des Gewindes der Gewindebohrung im anderen Maschinenbauteil führen kann), da sich das Federelement auch nach dem Einbau der Dichtung noch weiter zusammenpressen läßt. Außerdem können Schiebebewegungen des einen Maschinenbauteils relativ zum anderen Maschinenbauteil dort relativ ungehemmt stattfinden, wo in den Schraubeniochbereichen Federelemente vorgesehen sind, da dort die spezifische Flächenpressung zwischen der Flachdichtung und den Dichtflächen der beiden Maschinenbauteile geringer ist, als wenn dort ein inkompressibler Dichtungsplattenbereich zwischen den Maschinenbauteil-Dichtflächen eingespannt wäre. Wegen der geringeren spezifischen Flächenpressung führen Schiebebewegungen auch nicht zu Beschädigungen der Maschinenbauteil-Dichtflächen. Da die erfindungsgemäße Lösung Relativbewegungen der beiden Maschinenbauteile zuläßt, wird schließlich im Vergleich zu einer starren Verbindung die Gefahr verringert, daß an dem heißeren Maschinenbauteil oder irgendeinem der beiden Maschinenbauteile im Betrieb plastische Verformungen auftreten. Im Vergleich zu der vorstehend geschilderten bekannten Lösung der ElringKlinger AG lassen sich schließlich Bauteile, nämlich die Hülsen, einsparen und läßt sich der Bauraumbedarf verkleinern, da sich die Schraubenköpfe oder die auf die Gewindeschäfte aufzuschraubenden Muttern unmittelbar auf dem einen Maschinenbauteil abstützen können (gegebenenfalls auch über flache und billige Unterleg- oder Zahnscheiben).

Natürlich müssen die in der Dichtungsplatte vorgesehenen Schraubenlöcher, in deren Bereich die Dichtungsplatte mit Federelementen versehen ist, die Schrauben- bzw. Gewindeschäfte mit radialem Spiel aufnehmen, damit die beschriebenen Schiebebewegungen stattfinden können, ohne daß sich an der Dichtungsplatte Verwerfungen oder dergleichen einstellen und/oder die genannten Schäfte einer Scherbeanspruchung unterworfen werden.

Um trotz aller Wärmedehnungen und relativen Schiebebewegungen auch noch für einen Fixpunkt (oder mehrere relativ nahe beieinanderliegende Fixpunkte) zu sorgen, in dem die Dichtung bezüglich der beiden Maschinenbauteile fixiert ist, empfiehlt es sich, eine erfindungsgemäße Flachdichtung so zu gestalten, daß die Dichtung mindestens ein federelementloses Schraubenloch aufweist, in dessen Bereich der Verbund zwischen den beiden Maschinenbauteilen und der Flachdichtung praktisch starr ist.

Eine erfindungsgemäße Flachdichtung, mit der sich beides erreichen läßt, wird durch den Anspruch 1 definiert.

Es sei noch darauf hingewiesen, daß der Abstand der Schraubenlöcher von den Fluiddurchtrittsöffnungen ein bezüglich der Erfindung unkritischer Parameter ist und an sich beliebig groß sein kann; aus Gründen einer zuverlässigen Abdichtung um die Fluiddurchtrittsöffnungen herum wird man diesen Abstand jedoch nicht unnötig groß machen.

Wie bereits erwähnt, kommt die erfindungsgemäße Flachdichtung vor allem für Abgaskrümmerdichtungen in Frage; andere Einsatzgebiete sind jedoch beispielsweise Flanschverbindungen zu einem Abgas-Turbolader oder einem EGR-Ventil.

Wenn eine mehrere Fluid- bzw. Abgasdurchtrittsöffnungen aufweisende Dichtungsplatte eine längliche Form besitzt, so empfiehlt es sich, den vorstehend erwähnten Fixpunkt in Form des federelementlosen Schraubenlochs in einem bezüglich der Dichtungsplattenlängsrichtung mittleren Bereich der Dichtungsplatte anzuordnen, da dann die auftretenden maximalen Relativbewegungen kleiner sind als wenn der Fixpunkt beispielsweise in einem Endbereich der Dichtungsplatte liegen würde.

Ein Federelement einer erfindungsgemäßen Flachdichtung könnte z. B. die Form einer üblichen Federscheibe haben, welche ebenso wie die üblichen Unterlegscheiben von einem Schraubenschaft durchsetzt wird und an der Dichtungsplatte in geeigneter Weise, z. B. durch Punktschweißen, befestigt ist. Bei im wesentlichen metallischen Dichtungsplatten, welche eine oder mehrere Metallblechlagen aufweisen, ist es jedoch viel einfacher und billiger, einen Bereich einer solchen Metallblechlage zu einem Federelement umzuformen, so daß letzteres von mindestens einer geprägten Erhebung eines federelastischen Bereichs einer Metallblechlage der Dichtungsplatte gebildet wird. Diese Metallblechlage könnte nach dem Prägevorgang örtlich im Bereich des späteren Federelements so wärmebehandelt werden, daß der geprägte Bereich federelastische Eigenschaften erhält; da bei der Herstellung von zumindest im wesentlichen metallischen Flachdichtungen jedoch häufig Federstahlblech verarbeitet wird, empfehlen sich Ausführungsformen, bei denen die mit dem Federelement versehene Metallblechlage eine Federstahlblechlage ist.

Das Federelement könnte von einer oder mehreren geprägten Erhebungen gebildet werden, z. B. von um ein Schraubenloch herum angeordneten noppenförmigen Erhebungen; um die Trageigenschaften des Federelements um ein Schraubenloch herum jedoch gleichmäßig zu machen, empfiehlt es sich, das Federelement als in einer Metallblechlage ausgebildete Sicke zu gestalten, welche ein Schraubenloch vorzugsweise vollständig ringförmig umschließt. Die Sicke könnte eine sogenannte Halbsicke mit einem Querschnitt sein, welcher einem flachgezogenen Z entspricht, bevorzugt werden jedoch sogenannte Vollsicken, deren Querschnittsform ungefähr einem U oder einem Kreisbogen entspricht, da die von einer solchen Vollsicke aufnehmbaren Abstützkräfte größer sind als bei einer Halbsicke. Natürlich könnte das Federelement auch von mehreren, insbesondere konzentrischen Sicken gebildet werden.

Wenn die Dichtungsplatte eine längliche Form aufweist und die Fluiddurchtrittsöffnungen in Längsrichtung der Dichtungsplatte mindestens ungefähr hintereinanderliegend angeordnet sind, empfiehlt es sich im allgemeinen, in der Dichtungsplatte nur für eine einzige Fluiddurchtrittsöffnung ein dieser benachbartes federelementloses Schraubenloch vorzusehen, auch wenn es grundsätzlich möglich wäre, zwei einander benachbarten Fluiddurchtrittsöffnungen federelementlose Schraubenlöcher zuzuordnen.

Gerade bei Abgaskrümmerdichtungen weist die Dichtungsplatte üblicherweise zu beiden Seiten einer jeden Abgas-Durchtrittsöffnung jeweils ein Schraubenloch auf. Bei derart gestalteten erfindungsgemäßen Flachdichtungen empfiehlt es sich dann, für keines der Schraubenlöcher, welche derjenigen Fluid-Durchtrittsöffnung benachbart sind, in deren Bereich der Fixpunkt gelegt werden soll, ein Federelement vorzusehen.

Die Dichtungsplatte einer erfindungsgemäßen Flachdichtung kann ein- oder mehrlagig sein, wobei sich eine mehrlagige Dichtung hinsichtlich der Erleichterung von Schiebebewegungen naturgemäß positiv auswirkt (bei einer mehrlagigen Dichtung können die Federelemente an jeder beliebigen Lage oder auch an verschiedenen Lagen vorgesehen sein, da in jedem Fall die spezifische Flächenpressung zwischen der Flachdichtung und den Maschinenbauteil-Dichtflächen im Bereich eines erfindungsgemäßen Federelements - im Vergleich zu einem ein federelementloses Schraubenloch aufweisenden Bereich - vermindert wird); die Erfindung erlaubt es jedoch, erfindungsgemäße Flachdichtungen als einlagige Dichtungen zu gestalten, die dann natürlich besonders kostengünstig sind.

Ebenso wie für die Schrauben, mit denen ein Zylinderkopf eines Verbrennungsmotors mit dessen Motorblock verschraubt wird, ist auch das Anzugsdrehmoment für diejenigen Schrauben vorgegeben, mit denen im Zuge der Motormontage ein Auspuffkrümmer am Zylinderkopf befestigt wird. Es empfiehlt sich nun, das Federelement bzw. die Federelemente der erfindungsgemäßen Flachdichtung so zu gestalten, daß beim Einspannen der Flachdichtung mit einem vorgegebenen Anzugsdrehmoment für die Montageschrauben bezüglich der Federelemente ein Kräftegleichgewicht hergestellt wird, welches einen kleinen Spalt zwischen den Dichtflächen der Maschinenbauteile (also z. B. Zylinderkopf und Abgaskrümmer) und der Flachdichtung offen läßt, wobei dieser Spalt so bemessen sein soll, daß bei Erwärmung des einen Maschinenbauteils bzw. bei unterschiedlicher Erwärmung der beiden Maschinenbauteile dieser Spalt nicht völlig verschwindet und damit Verschiebungen in der Dichtspaltebene ohne große Hemmung erfolgen können. Erfindungsgemäß ist das Federelement also derart ausgebildet, daß bei einem vorgegebenen Anzugsdrehmoment für die dem Einspannen der Dichtungsplatte dienenden Schrauben das Federelement der eingespannten Dichtungsplatte senkrecht zu letzterer noch in beiden Richtungen federelastisch verformbar ist.

In diesem Zusammenhang sei bemerkt, daß es vorteilhaft ist, wenn die die Fluiddurchtrittsöffnungen der Flachdichtung umschließenden Abdichtelemente der Dichtungsplatte in zur Dichtungsplatte senkrechter Richtung derart elastisch verformbar sind, daß die Strömungspfade zwischen den Fluiddurchlaßöffnungen der Maschinenbauteil-Dichtflächen und den Fluiddurchtrittsöffnungen der Flachdichtung durch diese Abdichtelemente in jedem Zustand der Maschinenbauteile zuverlässig abgedichtet werden.

Aus Gründen der einfacheren Handhabung und Montage werden die Fluiddurchtrittsöffnungen der erfindungsgemäßen Flachdichtung im allgemeinen in einer einzigen, zusammenhängenden Dichtungsplatte ausgebildet sein, wobei die den einzelnen Fluiddurchtrittsöffnungen zugeordneten Teilbereiche der Dichtungsplatte über in Dichtungsplattenlängsrichtung elastisch verformbare, von der Dichtungsplatte gebildete Brücken miteinander verbunden sein können. Bei großen Verbrennungsmotoren, insbesondere bei Nutzfahrzeugmotoren, ist jedoch häufig jedem Brennraum ein gesonderter Zylinderkopf zugeordnet, zwischen dem und dem Motorblock auch jeweils eine gesonderte Zylinderkopfdichtung angeordnet ist. Deshalb sei darauf hingewiesen, daß die Dichtungsplatte der erfindungsgemäßen Flachdichtung auch unterteilt sein kann, so daß die Dichtung zwischen einander benachbarten Abgasdurchtrittsöffnungen in mehrere Teildichtungen unterteilt ist, von denen jede mindestens eine Abgasdurchtrittsöffnung enthält. Eine Teildichtung kann also eine einzige Abgasdurchtrittsöffnung enthalten oder z. B. zwei einander benachbarte Abgasdurchtrittsöffnungen. Erfindungsgemäß ist dann eine der Teildichtungen so gestaltet, daß sie einen Fixpunkt im Sinne der vorstehenden Definition bildet; die anderen Teildichtungen können dann z. B. über enge Schraubenlöcher an den Schrauben oder über Paßstifte lagefixiert werden.

Im Zusammenhang mit der vorliegenden Erfindung sind unter Abgasdurchtrittsöffnungen sowohl die Öffnungen für den Durchtritt der vom Motor kommenden Abgase zu verstehen, als auch eine Öffnung für den Durchtritt von in den Motor zurückzuführendes Abgas.

Wie bereits erwähnt, betrifft die Erfindung auch eine Baugruppe mit einem Zylinderkopf und einem einen Flansch aufweisenden Abgaskrümmer, dessen Flansch mittels jeweils einen Gewindeschaft aufweisenden Schrauben mit dem Zylinderkopf verbunden ist, sowie mit einer zwischen dem Zylinderkopf und dem Abgaskrümmerflansch eingespannten erfindungsgemäßen Flachdichtung, wobei sich diese Baugruppe erfindungsgemäß dadurch auszeichnet, daß sich die Köpfe der Schrauben oder auf die Gewindeschäfte aufgeschraubte Muttern ohne Zwischenschaltung eines Distanzelements, wie der vorstehend erwähnten Hülse, auf dem Abgaskrümmerflansch abstützen. Unter einem Distanzelement soll in diesem Zusammenhang aber nicht eine einfache Unterlegscheibe oder dergleichen verstanden werden, sondern nur ein Distanzelement, welches, wie eine solche Hülse, deutlich längere Schrauben oder Gewindeschäfte erforderlich macht und/oder eine gewisse Federelastizität aufweist. Insbesondere soll also eine erfindungsgemäße Baugruppe keine solchen Distanzelemente aufweisen, welche unter dem Einfluß der auf die Schrauben bzw. Gewindeschäfte wirkenden Zugkräfte als wenn auch steife Feder wirkt.

Zur Lagefixierung einer erfindungsgemäßen Flachdichtung könnte auch mindestens ein Paßstift verwendet werden, welcher in eine Bohrung in einem der beiden Maschinenbauteile oder in Bohrungen beider Maschinenbauteile spielfrei eingesetzt ist und ein Loch der Dichtungsplatte spielfrei durchsetzt.

Wie sich aus den vorstehenden Erläuterungen ergibt, soll das erfindungsgemäße Federelement so gestaltet sein, daß es beträchtliche Druckspannungen aufnehmen kann, ohne den federelastischen Bereich seiner Verformung zu verlassen. Letzteres soll auch für die Schrauben- bzw. Gewindeschäfte einer erfindungsgemäßen Baugruppe gelten.

Vorteilhaft ist es, wenn die erfindungsgemäße Flachdichtung auf einer oder auf beiden ihrer Hauptoberflächen mit einer Gleitbeschichtung versehen ist, wie sie beispielsweise von Zylinderkopfdichtungen her bekannt ist; eine solche Gleitbeschichtung kann beispielsweise aus PTFE bestehen. Durch eine solche Gleitbeschichtung wird erreicht, daß sich die beiderseits der Flachdichtung liegenden Dichtflächen der beiden Maschinenbauteile noch leichter gegeneinander verschieben lassen.

Im folgenden soll die Erfindung anhand der beigefügten Zeichnungen noch näher erläutert werden; in der Zeichnung zeigen:
- Fig. 1: einen schematischen Schnitt durch einen Teil einer Baugruppe, welche einen Zylinderkopf, einen Abgaskrümmer, eine zwischen diesen angeordnete Abgaskrümmerdichtung und die zum Verspannen dieser Teile dienenden Elemente umfaßt, wobei diese Baugruppe dem Stand der Technik entspricht, wie er von der ElringKlinger AG bereits realisiert wurde;
- Fig. 2: eine Draufsicht auf eine erfindungsgemäße Flachdichtung, welche als Abgaskrümmerdichtung gestaltet ist;
- Fig. 3: einen Schnitt durch diese Dichtung nach der Linie 3-3 in Fig. 2;
- Fig. 4: eine schematische Darstellung einer erfindungsgemäßen Baugruppe zur Verdeutlichung des Funktionsprinzips der vorliegenden Erfindung, wobei die erfindungsgemäße Flachdichtung weggelassen wurde und nur deren Federelemente symbolisch dargestellt wurden, und
- Fig. 5: eine der Fig. 1 entsprechende Darstellung einer erfindungsgemäßen Baugruppe.

Die Fig. 1 zeigt schematisch einen Teil eines Zylinderkopfs 10, welcher an einer Abgasdurchlaßöffnung 12 endet, ferner einen Teil eines Abgaskrümmers 14, von dem ein Teil eines Abgaskrümmerflansches 16 dargestellt ist, welcher an einer Abgasdurchlaßöffnung 18 des Abgaskrümmers endet, an die sich ein Abgasrohr 20 des Abgaskrümmers anschließt, welches mit dem Flansch 16 z. B. durch Schweißen verbunden ist. Zwischen einander zugewandten Dichtflächen 10a und 14a des Zylinderkopfs 10 und des Abgaskrümmers 14 liegt eine Abgaskrümmerdichtung 22, welche mittels Schrauben 24, von denen die Fig. 1 nur eine einzige zeigt, zwischen den Dichtflächen eingespannt werden soll (die Fig. 1 zeigt einen Zustand vor dem Anziehen der Schrauben 24). Für den Gewindeschaft 24a einer jeden Schraube 24 weist der Zylinderkopf 10 eine Gewindebohrung 10a auf; dieser Gewindeschaft durchsetzt mit radialem Spiel eine Bohrung 16a im Abgaskrümmerflansch 16 sowie eine metallische Hülse 28, die sich auf dem Abgaskrümmerflansch 16 abstützt und ihrerseits ein Widerlager für den Schraubenkopf 24b der Schraube 24 bildet (an die Stelle des Schraubenkopfs 24b könnte auch eine auf den Gewindeschaft 24a aufgeschraubte Mutter treten).

Bei der Abgaskrümmerdichtung 22 soll es sich um eine einlagige metallische Dichtung handeln, deren Dichtungsplatte 22a, ausgenommen im Bereich von Abdichtelementen 22b, eben ist und für jede Schraube 24 ein Schraubenloch 22c aufweist, welches vom Gewindeschaft 24a mit radialem Spiel durchsetzt wird. Bei den gezeichneten Abdichtelementen 22b soll es sich um sogenannte Halbsicken handeln, welche jeweils eine Abgasdurchlaßöffnung 12 bzw. 18 kreisringförmig umschließen und sich bei angezogenen Schrauben 24, d. h. bei eingespannter Dichtung 22, einerseits an der Dichtfläche 10a und andererseits an der Dichtfläche 14a elastisch abstützen.

Wenn der Abgaskrümmer 14, und zwar insbesondere sein Flansch 16, nach dem Starten des Motors schneller aufgeheizt wird und auf höhere Temperaturen kommt als der Zylinderkopf 10, längt sich der Abgaskrümmerflansch 16 z. b. in gemäß Fig. 1 horizontaler Richtung sehr viel stärker als der Zylinderkopf 10, woraus resultiert, daß die Dichtfläche 14a die Tendenz hat, sich relativ zur Dichtfläche 10a in horizontaler Richtung zu verschieben. Soweit dies durch die Gleitreibung zwischen der Abgaskrümmerdichtung 22 und den beiden Dichtflächen 10a und 14a nicht verhindert wird, führt eine solche Relativverschiebung zu einer Biegebeanspruchung des Gewindeschafts 24a sowie, wenn auch in geringem Maß, zu einer zusätzlichen Zugbeanspruchung des Gewindeschafts, welche aus dem sich einstellenden Biegewinkel des Gewindeschafts 24a resultiert. Dank der Hülsen 28 und der durch diese bedingten großen Länge der Gewindeschäfte 24a lassen sich die Konsequenzen der beschriebenen Schiebebewegungen durch die Schrauben 24 und die Hülsen 28 elastisch auffangen.

Andererseits hat die Verwendung der Hülsen 28 und langer Schrauben- bzw. Gewindeschäfte höhere Material- und Montagekosten zur Folge, aber auch eine Vergrößerung des benötigten Bauraums um die Höhe bzw. Länge der Hülsen 28.

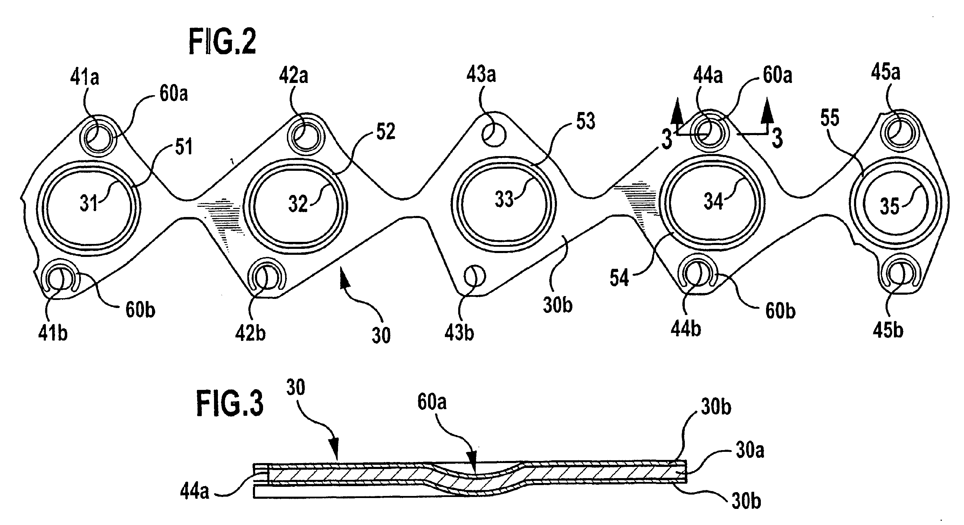

Die in den Figuren 2 und 3 dargestellte Abgaskrümmerdichtung hat gleichfalls eine Dichtungsplatte 30 aus einer einzigen Metallblechlage 30a, welche beidseitig mit einer Gleitbeschichtung 30b versehen ist. Die Dichtung ist für einen 4-Zylinder-Motor oder für eine Zylinderbank eines 8-Zylinder-V-Motors vorgesehen, welcher über eine Abgasrückführung verfügt. Deshalb weist die Dichtungsplatte 30 fünf Abgasdurchtrittsöffnungen auf, nämlich die Abgasdurchtrittsöffnungen 31, 32, 33 und 34 für die sogenannten Abgasports, welche den vier Brennräumen zugeordnet sind, und die Abgasdurchtrittsöffnung 35 für die Abgasrückführung. Jeder Abgasdurchtrittsöffnung sind in der Dichtungsplatte 30 zwei Schraubenlöcher 41a, 41b bzw. 42a, 42b bzw. 43a, 43b bzw. 44a, 44b bzw. 45a, 45b zugeordnet, welche bezüglich der Dichtungsplattenlängsmittelachse 46 auf einander gegenüberliegenden Seiten der betreffenden Abgasdurchtrittsöffnung liegen. Um jede Abgasdurchtrittsöffnung herum verläuft ein federelastisches Abdichtelement 51 bzw. 52 bzw. 53 bzw. 54 bzw. 55, welches die betreffende Abgasdurchtrittsöffnung ringförmig umschließt und bei der dargestellten Ausführungsform die Gestalt einer durch einen Prägevorgang gewonnenen Sicke in der Metallblechlage haben soll - es könnte sich um eine sogenannte Vollsicke handeln, bei der dargestellten Abgaskrümmerdichtung handelt es sich jedoch um eine sogenannte Halbsicke, deren Querschnittsform ungefähr einem flachgezogenen Z entspricht.

Bei der dargestellten erfindungsgemäßen Dichtung stellt der mittlere Dichtungsbereich einen Fixpunkt im Sinne der obigen Ausführungen dar, weshalb die der mittleren Abgasdurchtrittsöffnung 33 zugeordneten Schraubenlöcher 43a und 43b nicht mit einem erfindungsgemäßen Federelement versehen sind; außerdem entspricht der Durchmesser der Schraubenlöcher 43a und 43b dem Durchmesser des Schafts der verwendeten Schrauben bzw. der verwendeten Gewindeschäfte, so daß diese Schäfte die Schraubenlöcher 43a und 43b spielfrei durchgreifen. Um die Schraubenlöcher 43a und 43b herum ist die Dichtungsplatte 30 also eben.

Hingegen sind alle anderen Schraubenlöcher mit erfindungsgemäßen Federelementen 60a bzw. 60b versehen und haben einen Lochdurchmesser, welcher größer ist als der Durchmesser des Schafts der verwendeten Schrauben bzw. der verwendeten Gewindeschäfte, so daß diese Schäfte die Schraubenlöcher 41a bis 42b und 44a bis 45b mit radialem Spiel durchgreifen und in der Zeichnungsebene der Fig. 2 liegende Schiebebewegungen derjenigen Teile eines Abgaskrümmerflansches zulassen, welche zu beiden Seiten des zentralen Dichtungsplattenbereichs liegen, der die Abgasdurchtrittsöffnung 33 und die Schraubenlöcher 43a, 43b aufnimmt.

Alle Federelemente 60a und 60b sind als Sicken, und zwar insbesondere als sogenannte Vollsicken gestaltet, welche durch Prägen des Metallblechs der Dichtungsplatte 30 gewonnen wurden und einen ungefähr kreisbogenförmigen Querschnitt haben (siehe Fig. 3). Während die Federelemente bzw. Sicken 60a die zugeordneten Schraubenlöcher ringförmig vollständig umschließen, erstrecken sich die Federelemente bzw. Sicken 60b nicht vollständig, sondern nur größtenteils um die zugeordneten Schraubenlöcher herum.

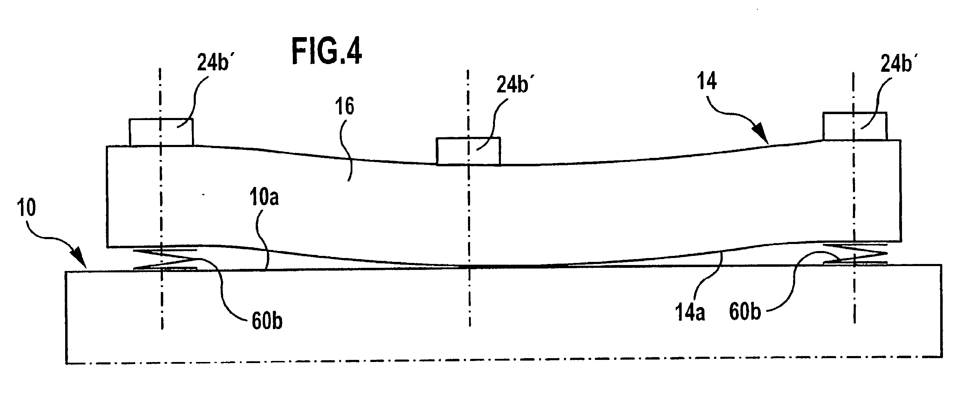

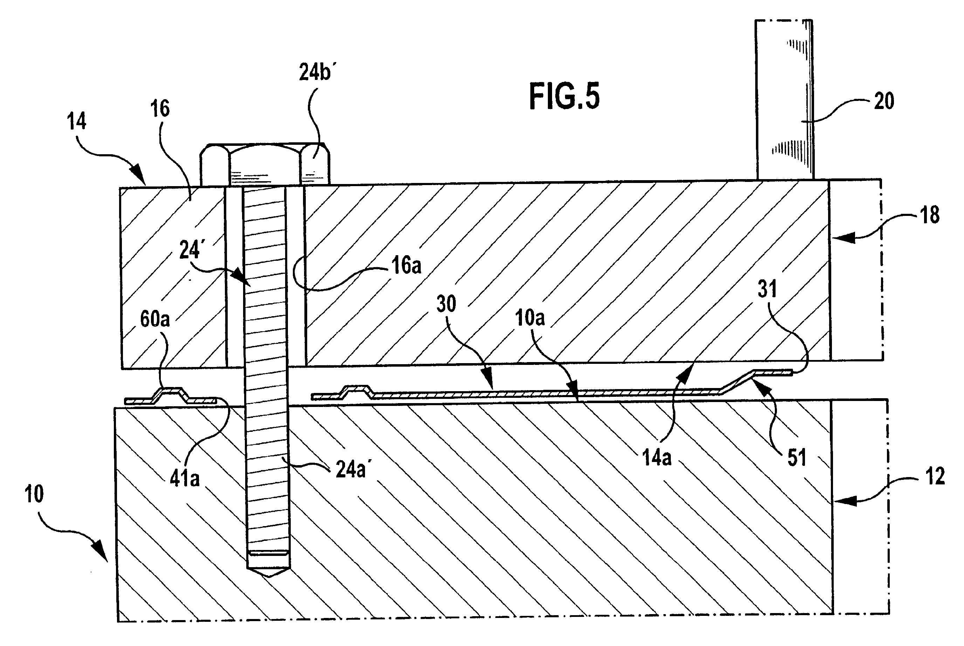

In den Figuren 4 und 5 ist eine erfindungsgemäße Baugruppe dargestellt, und zwar wiederum sehr schematisch, um den Unterschied zu dem in Fig. 1 dargestellten Stand der Technik und die Funktionsweise der Erfindung noch mehr zu verdeutlichen. Dabei wurden in den Figuren 4 und 5 weitgehend dieselben Bezugszeichen verwendet wie in den Figuren 1 und 2, gegebenenfalls unter Hinzufügung eines Strichs.

Die Fig. 5 zeigt eine Darstellung entsprechend der Fig. 1, und zwar im Bereich des Schraubenlochs 60a und der Abgasdurchtrittsöffnung 31 der erfindungsgemäßen und in Fig. 2 dargestellten Flachdichtung, wobei der besseren Darstellbarkeit wegen ebenso wie in Fig. 1 ein Zustand gezeichnet wurde, in dem die der Befestigung des Abgaskrümmers dienenden Schrauben noch nicht angezogen und die erfindungsgemäße Flachdichtung noch nicht eingespannt ist.

Bei der in Fig. 5 dargestellten Baugruppe stützt sich der Schraubenkopf 24b' unmittelbar auf dem Abgaskrümmerflansch 16 ab, wobei allerdings zwischen dem Schraubenkopf und dem Abgaskrümmerflansch noch eine übliche Unterleg- oder Zahnscheibe vorgesehen sein könnte.

Die Fig. 4 stimmt insoweit nicht mit der Fig. 2 überein, als der Einfachheit halber die Dichtung sowie diejenigen Schrauben weggelassen wurden, welche den Abgasdurchtrittsöffnungen 32 und 34 zugeordnet sind. Die Federelemente 60b wurden symbolisch durch Schraubenfedern wiedergegeben, und von den Schrauben wurden nur die Schraubenköpfe 24b' angedeutet. Wie die Fig. 4 andeutet, ist im Bereich der Längsmitte des Abgaskrümmerflansches 16 dessen Dichtfläche 14a durch die dort angeordneten Schrauben so weit gemäß Fig. 4 nach unten gezogen, wie dies die Dicke der Dichtungsplatte 30 der in Fig. 4 nicht dargestellten erfindungsgemäßen Flachdichtung zuläßt, während außerhalb dieses mittleren Bereichs des Abgaskrümmerflansches 16 ein offener Spalt zwischen den Dichtflächen 10a und 14a sowie der nicht dargestellten Dichtung existiert, um die vorstehend beschriebenen Schiebebewegungen zuzulassen, welche durch die erfindungsgemäßen Federelemente nicht nennenswert behindert werden.

## Patentansprüche

1. Flachdichtung zur Abdichtung eines Dichtspalts zwischen einander zugewandten Dichtflächen (10a, 14a) von Maschinenbauteilen (10, 14), in denen sich mehrere, für heiße Fluide vorgesehene Durchlaßkanäle befinden, welche in Fluiddurchlaßöffnungen (12, 18) münden, die an einander gegenüberliegenden Stellen in den Maschinenbauteil-Dichtflächen ausgebildet sind, wobei eine zwischen den Maschinenbauteil-Dichtflächen (10a, 14a) einzuspannende, mindestens eine Metallblechlage aufweisende Dichtungsplatte (30) der Flachdichtung für jeweils zwei einander gegenüberliegende Fluiddurchlaßöffnungen (12, 18) der beiden Maschinenbauteile (10, 14) eine Fluiddurchtrittsöffnung (31 - 35) besitzt, der wenigstens ein die Fluiddurchtrittsöffnung umschließendes und in zur Dichtungsplatte (30) senkrechter Richtung elastisch verformbares Abdichtelement (51 - 55) der Dichtungsplatte zugeordnet ist, und wobei die Dichtungsplatte mehrere, den Fluiddurchtrittsöffnungen benachbarte Schraubenlöcher (41a - 45b) für den Durchtritt von dem Einspannen der Flachdichtung zwischen den Maschinenbauteil-Dichtflächen (10a, 14a) dienenden Gewindeschäften (24') aufweist, **dadurch gekennzeichnet, daß** die Dichtungsplatte (30) für mindestens eine erste (31) ihrer Fluiddurchtrittsöffnungen (31 - 35) im Bereich eines dieser Fluiddurchtrittsöffnung benachbarten Schraubenlochs (41a, 41b) mit wenigstens einem beim Einspannen der Dichtungsplatte druckbeaufschlagten und in beiden zur Dichtungsplatte senkrechten Richtungen elastisch verformbaren Federelement (60a, 60b) versehen ist, und daß die Dichtungsplatte (30) für mindestens eine zweite (33) ihrer Fluiddurchtrittsöffnungen (31 - 35) ein dieser benachbartes federelementloses Schraubenloch (43a, 43b) aufweist.

2. Flachdichtung nach Anspruch 1, bei der die Dichtungsplatte (30) eine längliche Form aufweist und die Fluiddurchtrittsöffnungen (31 - 35) in Längsrichtung der Dichtungsplatte mindestens ungefähr hintereinanderliegend angeordnet sind, **dadurch gekennzeichnet, daß** das federelementlose Schraubenloch (43a, 43b) in einem bezüglich der Dichtungsplattenlängsrichtung mittleren Bereich der Dichtungsplatte (30) angeordnet ist.

3. Flachdichtung nach Anspruch 1 oder 2, **dadurch gekennzeichnet, daß** das Federelement (60a) von mindestens einer geprägten Erhebung einer federelastischen Metallblechlage (30a) der Dichtungsplatte (30) gebildet wird.

4. Flachdichtung nach Anspruch 3, **dadurch gekennzeichnet, daß** die mit dem Federelement (60a) versehene Metallblechlage (30a) eine Federstahlblechlage ist.

5. Flachdichtung nach Anspruch 3 oder 4, **dadurch gekennzeichnet, daß** die geprägte Erhebung als Sicke (60a, 60b) ausgebildet ist.

6. Flachdichtung nach Anspruch 5, **dadurch gekennzeichnet, daß** die Sicke eine Vollsicke (60a) ist.

7. Flachdichtung nach einem oder mehreren der vorstehenden Ansprüche, **dadurch gekennzeichnet, daß** das Federelement (60a) ein Schraubenloch (41a) mindestens nahezu ringförmig umschließt.

8. Flachdichtung nach einem oder mehreren der vorstehenden Ansprüche, **dadurch gekennzeichnet, daß** die Dichtungsplatte (30) nur für eine einzige Fluiddurchtrittsöffnung (33) ein dieser benachbartes federelementloses Schraubenloch (43a, 43b) aufweist.

9. Flachdichtung nach einem oder mehreren der vorstehenden Ansprüche, **dadurch gekennzeichnet, daß** alle der zweiten Fluiddurchtrittsöffnung (33) benachbarten Schraubenlöcher (43a, 43b) federelementlos sind.

10. Flachdichtung nach einem oder mehreren der vorstehenden Ansprüche, **dadurch gekennzeichnet, daß** die Dichtungsplatte (30) nur eine einzige Metallblechlage (30a) aufweist.

11. Flachdichtung nach einem oder mehreren der vorstehenden Ansprüche, **dadurch gekennzeichnet, daß** das Federelement (60a, 60b) derart ausgebildet ist, daß bei einem vorgegebenen Anzugsdrehmoment für die dem Einspannen der Dichtungsplatte (30) dienenden Schrauben (24') das Federelement der eingespannten Dichtungsplatte senkrecht zu letzterer noch in beiden Richtungen federelastisch verformbar ist.

12. Flachdichtung nach einem oder mehreren der vorstehenden Ansprüche, **dadurch gekennzeichnet, daß** die Dichtung (30) als Abgaskrümmerdichtung für den Einbau zwischen einem Zylinderkopf (10) und einem Flansch (16) eines Abgaskrümmers (14) ausgebildet ist und die Fluiddurchtrittsöffnungen (31 - 35) den Abgasports (12, 18) von Zylinderkopf und Abgaskrümmerflansch zugeordnete Abgasdurchtrittsöffnungen sind.

13. Flachdichtung nach Anspruch 12, **dadurch gekennzeichnet, daß** die Dichtung zwischen einander benachbarten Abgasdurchtrittsöffnungen in mehrere Teildichtungen unterteilt ist, von denen jede mindestens eine Abgasdurchtrittsöffnung enthält.

14. Baugruppe mit einem Zylinderkopf (10) und einem einen Flansch (16) aufweisenden Abgaskrümmer (14), dessen Flansch mittels Gewindeschäften (24a') und Muttern oder mittels Schrauben (24') mit dem Zylinderkopf verbunden ist, sowie mit einer zwischen dem Zylinderkopf und dem Abgaskrümmerflansch eingespannten Flachdichtung (30) nach Anspruch 12 oder 13, **dadurch gekennzeichnet, daß** sich Köpfe (24b') der Schrauben (24') oder auf die Gewindeschäfte aufgeschraubte Muttern ohne Zwischenschaltung eines Distanzelements auf dem Abgaskrümmerflansch (16) abstützen.

## Claims

1. Flat gasket for sealing a sealing gap between sealing surfaces (10a, 14a) facing one another on machine components (10, 14) containing several passages for hot fluids, which open into fluid ports (12, 18) formed at locations opposite one another in the machine component sealing surfaces, a gasket plate (30) of the flat gasket which is to be clamped between the machine component sealing surfaces (10a, 14a) and comprises at least one sheet metal layer having for each pair of fluid ports (12, 18) located opposite one another on the two machine components (10, 14) a fluid passage opening (31 - 35), associated with which is at least one sealing element (51 - 55) of the gasket plate, which encloses the fluid passage opening and is capable of undergoing elastic deformation in a direction perpendicular to the gasket plate (30), and the gasket plate having adjacent to the fluid passage openings several screw holes (41a - 45b) for the passage of threaded shafts (24') serving to clamp the flat gasket between the machine component sealing surfaces (10a, 14a), **characterized in that** the gasket plate (30) has for at least a first one (31) of its fluid passage openings (31 - 35) in the area of a screw hole (41a - 45b) adjacent to this fluid passage opening at least one spring element (60a, 60b) which is subjected to pressure during the clamping of the gasket plate and is capable of undergoing elastic deformation in both directions perpendicular to the gasket plate, and **in that** the gasket plate (30) has for at least a second one (33) of its fluid passage openings (31 - 35) adjacent thereto a screw hole (43a, 43b) without such a spring element.

2. Flat gasket as defined in Claim 1, the gasket plate (30) having an elongate shape, and the fluid passage openings (31 - 35) being arranged at least approximately one behind the other in the longitudinal direction of the gasket plate, **characterized in that** the screw hole (43a, 43b) without a spring element is arranged in a central area of the gasket plate (30) with respect to the longitudinal direction of the gasket plate.

3. Flat gasket as defined in Claim 1 or 2, **characterized in that** the spring element (60a) is formed by at least one stamped elevation of a spring-elastic sheet metal layer (30a) of the gasket plate (30).

4. Flat gasket as defined in Claim 3, **characterized in that** the sheet metal layer (30a) provided with the spring element (60a) is a layer of sheet spring steel.

5. Flat gasket as defined in Claim 3 or 4, **characterized in that** the stamped elevation is formed as a bead (60a, 60b).

6. Flat gasket as defined in Claim 5, **characterized in that** the bead is a full bead (60a).

7. Flat gasket as defined in any one or several of the preceding claims, **characterized in that** the spring element (60a) encloses a screw hole (41a) at least almost in the shape of a ring.

8. Flat gasket as defined in any one or several of the preceding claims, **characterized in that** the gasket plate (30) has for only a single fluid passage opening (33) a screw hole (43a, 43b) adjacent thereto, which is without a spring element.

9. Flat gasket as defined in any one or several of the preceding claims, **characterized in that** all screw holes (43a, 43b) adjacent to the second fluid passage opening (33) are without a spring element.

10. Flat gasket as defined in any one or several of the preceding claims, **characterized in that** the gasket plate (30) comprises only a single sheet metal layer (30a).

11. Flat gasket as defined in any one or several of the preceding claims, **characterized in that** the spring element (60a, 60b) is designed such that given a predetermined tightening torque for the screws (24') serving to clamp the gasket plate (30), the spring element of the clamped gasket plate is still able to undergo elastic deformation in both directions perpendicular to the gasket plate.

12. Flat gasket as defined in any one or several of the preceding claims, **characterized in that** the gasket (30) is designed as an exhaust manifold gasket for installation between a cylinder head (10) and a flange (16) of an exhaust manifold (14), and the fluid passage openings (31 - 35) are exhaust gas passage openings associated with the exhaust gas ports (12, 18) of cylinder head and exhaust manifold flange.

13. Flat gasket as defined in Claim 12, **characterized in that** the gasket between adjacent exhaust gas passage openings is divided up into several partial gaskets, each of which contains at least one exhaust gas passage opening.

14. Assembly with a cylinder head (10) and an exhaust manifold (14) having a flange (16) which is joined by means of threaded shafts (24a') and nuts or by means of screws (24') to the cylinder head, and with a flat gasket (30) as defined in claim 12 or 13 clamped between the cylinder head and the exhaust manifold flange, **characterized in that** heads (24b') of the screws (24') or nuts screwed onto the threaded shafts are supported on the exhaust manifold flange (16) without the interposition of a spacer element.

## Revendications

1. Joint plat pour étancher une fente entre des surfaces d'étanchement (10a, 14a) tournées l'une vers l'autre de composants de machine (10, 14) dans lesquels sont réalisés plusieurs canaux de passage prévus pour des fluides chauds et débouchant dans des ouvertures de passage de fluide (12, 18) qui sont réalisées à des emplacements mutuellement opposés dans les surfaces d'étanchement (10a, 14a) des composants de machine, dans lequel une plaque d'étanchement (30), destinée à être serrée entre les surfaces d'étanchement (10a, 14a) des composants de machine et comportant au moins une couche de tôle métallique, du joint plat, possède une ouverture de traversée de fluide (31-35) pour deux ouvertures de passage de fluide (12, 18) respectives mutuellement opposées des deux composants de machine (10, 14), ouverture de traversée à laquelle est associé au moins un élément d'étanchement (51-55) de la plaque d'étanchement qui entoure l'ouverture traversante et qui est déformable élastiquement en direction perpendiculaire à la plaque d'étanchement (30), et dans lequel la plaque d'étanchement possède plusieurs trous à vis (41a-45b) voisins des ouvertures traversantes pour la traversée de tiges filetées (24') qui servent à serrer le joint plat entre les surfaces d'étanchement (10a, 14a) des composants de machine, **caractérisé en ce que** la plaque d'étanchement (30) est pourvue, pour une première (31) au moins de ses ouvertures traversantes (31-35) et dans la région d'un trou à vis (41a, 41b) voisin de cette ouverture traversante, d'au moins un élément élastique (60a, 60b) sollicité sous pression lors du serrage de la plaque d'étanchement et déformable élastiquement dans deux directions perpendiculaires à la plaque d'étanchement, et **en ce que** la plaque d'étanchement (30) comporte, pour au moins une seconde (33) de ses ouvertures traversantes (31-35) un trou à vis (43a, 43b) voisin de cette ouverture et dépourvu d'élément élastique.

2. Joint plat selon la revendication 1, dans lequel la plaque d'étanchement (30) présente une forme allongée, et les ouvertures traversantes (31-35) sont agencées dans la direction longitudinale de la plaque d'étanchement et au moins approximativement les unes derrière les autres, **caractérisé en ce que** le trou à vis (43a, 43b) dépourvu d'élément élastique est agencé dans une région médiane, par référence à la direction longitudinale de la plaque d'étanchement, de la plaque d'étanchement (30).

3. Joint plat selon la revendication 1 ou 2, **caractérisé en ce que** l'élément élastique (60a) est formé par au moins une bosse estampée d'une couche de tôle métallique (30a), élastique à la manière d'un ressort, de la plaque d'étanchement (30).

4. Joint plat selon la revendication 3, **caractérisé en ce que** la couche de tôle métallique (30a) pourvue de l'élément élastique (60a) est une couche de tôle en acier-ressort.

5. Joint plat selon la revendication 3 ou 4, **caractérisé en ce que** la bosse estampée est réalisée sous forme de moulure (60a, 60b).

6. Joint plat selon la revendication 5, **caractérisé en ce que** la moulure est une moulure pleine (60a).

7. Joint plat selon l'une ou plusieurs des revendications précédentes, **caractérisé en ce que** l'élément élastique (60a) enferme un trou à vis (41a) au moins pratiquement en formant un anneau.

8. Joint plat selon l'une ou plusieurs des revendications précédentes, **caractérisé en ce que** la plaque d'étanchement (30) comporte seulement pour une unique ouverture traversante (33) un trou à vis (43a, 43b) voisin de cette ouverture et dépourvu d'élément élastique.

9. Joint plat selon l'une ou plusieurs des revendications précédentes, **caractérisé en ce que** tous les trous à vis (43a, 43b) voisins de la seconde ouverture traversante (33) sont dépourvus d'éléments élastiques.

10. Joint plat selon l'une ou plusieurs des revendications précédentes, **caractérisé en ce que** la plaque d'étanchement (30) comprend seulement une unique couche de tôle métallique (30a).

11. Joint plat selon l'une ou plusieurs des revendications précédentes, **caractérisé en ce que** l'élément élastique (60a, 60b) est réalisé de telle manière qu'en appliquant un couple de serrage prédéterminé sur les vis (24') servant à serrer la plaque d'étanchement (30), l'élément élastique de la plaque d'étanchement serrée est déformable de façon élastique encore dans les deux directions perpendiculaires à ladite plaque.

12. Joint plat selon l'une ou plusieurs des revendications précédentes, **caractérisé en ce que** le joint (30) est réalisé en tant que joint de collecteur d'échappement destiné à être monté entre une culasse (10) et une bride (16) d'un collecteur d'échappement (14), et **en ce que** les ouvertures traversantes (31-35) sont des ouvertures traversantes d'échappement associées aux orifices d'échappement (12, 18) de la culasse et de la bride du collecteur d'échappement.

13. Joint plat selon la revendication 12, **caractérisé en ce que** le joint est subdivisé en plusieurs joints partiels entre des ouvertures traversantes mutuellement voisines, parmi lesquels chaque joint partiel contient au moins une ouverture traversante d'échappement.

14. Groupe structurel comprenant une culasse (10) et un collecteur d'échappement (14) comportant une bride (16), dont la bride est reliée à la culasse aux moyens de tiges filetées (24a') et d'écrous, ou au moyen de vis (24'), et comprenant un joint plat (30) selon l'une ou l'autre des revendications 12 et 13, serré entre la culasse et la bride du collecteur d'échappement, **caractérisé en ce que** des têtes (24b') des vis (24'), ou des écrous vissés sur les tiges filetées, s'appuient sur la bride (16) du collecteur d'échappement sans interposition d'un élément d'écartement.
